# EUROPÄISCHE PATENTSCHRIFT

(11) **EP 4 610 456 B1**
(45) Veröffentlichungstag und Bekanntmachung des Hinweises auf die Patenterteilung: **29.04.2026**
(21) Anmeldenummer: 24160812.4
(22) Anmeldetag: 01.03.2024
(51) Int. Cl.: E04H 17/00, E04H 17/02, E04H 17/06, A01K 3/00, E01F 13/00

(54) **ZAUNPFAHL**
FENCE POST
PIQUET DE CLÔTURE

(43) Veröffentlichungstag der Anmeldung: 03.09.2025
(73) Patentinhaber: Cremers, Johan, 52511 Geilenkirchen (DE)
(72) Erfinder: Cremers, Johan, 52511 Geilenkirchen (DE); Baumgart, Gregor, 41749 Viersen (DE)
(74) Vertreter: Hannke, Christian

(56) Entgegenhaltungen:
- EP-A1- 3 925 438
- DE-U1- 202018 001 744
- DE-U1- 202023 106 631
- JP-A- 2004 116 117
- JP-A- 2014 000 765
- JP-B2- 4 864 832

## Beschreibung

Die Erfindung betrifft einen Zaunpfahl für einen mobilen Weidezaun, wobei der Zaunpfahl zumindest umfasst: ein Rohrelement, welches rohrförmig ist und ein in Raum umschließt und sich entlang einer Rohrlängsachse erstreckt und eine Verankerungsvorrichtung, welcher an einem der Rohrelementenden des Rohrelements angeordnet ist, mit welchen der Zaunpfahl im Boden befestigbar ist.

Zaunpfähle für mobile Weidezäune werden im landwirtschaftlichen Sektor zum Beispiel zur Umzäunung von Tieren eingesetzt. Weitere Einsatzgebiete solcher mobilen Weidezäune sind Abgrenzungen in Skigebieten, an Baustellen oder im privaten Bereich. Es ist dabei möglich, die mobilen Zäune dauerhaft stehend zu verwenden. Die mobilen Zäune bestehen aus Zaunpfählen, die in der Erde mit Bodennägeln befestigt werden und einem Zaunnetz, Zaunband oder Kordeln oder Seilen, meist gezwirnt oder geflochten, welches zwischen den einzelnen Zaunpfählen, horizontal verlaufend verspannt wird. Aus dem Stand der Technik sind verschiedene Zaunpfähle bekannt. Insbesondere werden diese Zaunpfähle aus extrudiertem PVC hergestellt, aus thermoplastischem Kunststoff spritzgegossen oder aus pultrudiertem glasfaserverstärkten Kunststoff hergestellt. Diese aus dem Stand der Technik bekannten Zaunpfähle haben jedoch verschiedene Nachteile.

Der extrudierte PVC-Zaunpfahl ist in der Herstellung zwar kostengünstig und durch das PVC UV-beständig. Allerdings ist durch das PVC der Pfahl weich und verbiegt sich leicht. Auch ist der Pfahl aufgrund der hohen benötigten Wandstärke recht schwer und die Recyclingfähigkeit von PVC ist nur bedingt gut. Außerdem entsteht eine Sollbruchstelle, wenn Löcher in den Fall eingebracht werden. Auch besteht die Schwierigkeit, dass PVC sich nachträglich nur schlecht mit anderen Kunststoffen verbinden lässt.

Zaunpfähle aus thermoplastischem Kunststoff werden in der Regel durch Spritzguss hergestellt und können mit Glasfasern verstärkt werden. Allerdings besteht der Nachteil eines vergleichsweise teuren Herstellungswerkzeugs für den Spritzguss. Hierbei muss außerdem für jede Geometrieänderung auch das Werkzeug selbst modifiziert werden, was weitere Kosten verursacht. Im Spritzgussverfahren selbst können nur sehr kurze ungerichtete Kurzfasern eingebracht werden. Der Pfahl ist durch die komplette Kunststofffüllung außerdem sehr schwer.

Zaunpfähle für die genannten Zäune werden außerdem aus pultrudiertem glasfaserverstärkten Kunststoff hergestellt. Dieser ist durch den Einsatz von Langfasern sehr steif und auch günstig in der Herstellung. Allerdings besteht die Matrix in der Regel aus einem duroplastischen Material, z.B. Epoxid- oder Vinylharz, welches nicht recyclebar ist. Das Material ist außerdem durch den Eintrag von Wärme nicht nachträglich verformbar und auch nur bedingt UV-stabil.

Die JP 2004 116 117 A offenbart eine Stützeinheit für einen Wildschutzzaun. Die Stützeinheit weist eine Schichtstruktur auf, wobei diese zumindest aus einer Überzugsschicht aus einem thermoplastischen Harz und einer Zwischenschicht aus faserverstärktem, duroplastischem Harz bestehen.

Die JP 2014 000 765 A offenbart einen flexiblen Stab, der u.a. als Telefonmast verwendet werden kann. Dieser zeichnet sich durch eine Schichtstruktur aus, wobei die äußere Schicht aus Polyurethan und die innere Schicht aus einem Vliesstoff, welcher mit einer flüssigen Harzrohmaterialzusammensetzung imprägniert und anschließend polymerisiert wird, besteht.

Die EP 3 925 438 A1 offenbart einen Weidezaunpfahl mit einem durch Glasfasern verstärkten Pfahlgrundkörper. Dabei wird der Pfahlgrundkörper durch Gießen, beispielsweise mittels Spritzgießverfahrens, hergestellt, wobei die Glasfasern eine Länge von 140 µm bis 25 mm aufweisen.

Es ist daher Aufgabe der vorliegenden Erfindung einen Zaunpfahl für einen mobilen Weidezaun bereitzustellen, welcher leicht, kostengünstig und UV-stabil ist und außerdem eine gute Recyclingfähigkeit aufweist, ohne dass dabei Kompromisse bei den mechanischen Eigenschaften eingegangen werden müssen.

Die Aufgabe wird gelöst durch einen Zaunpfahl für einen mobilen Weidezaun, wobei der Zaunpfahl zumindest umfasst: ein Rohrelement welches rohrförmig ist und einen Innenraum umschließt und sich entlang einer Rohrlängsachse erstreckt und eine Verankerungsvorrichtung, welcher an einem der Rohrelementenden des Rohrelements angeordnet ist, mit welchem der Zaunpfahl im Boden befestigbar ist. Die Erfindung ist dadurch gekennzeichnet, dass das Rohrelement aus einer Schichtstruktur besteht, welche zumindest eine innere und eine äußere Schicht umfasst, welche radial aneinander angeordnet sind, sodass die innere Schicht die Oberfläche des Rohrelements zum Innenraum darstellt und die äußere Schicht, die Oberfläche des Rohrelements zur äußeren Umgebung, wobei die innere Schicht aus einem faserverstärkten Verbundwerkstoff besteht, welcher zumindest eine thermoplastische Matrix, zumindest bestehend aus einem thermoplastischen Kunststoff und darin eingebettete Verstärkungsfasern umfasst, und die äußere Schicht, welche aus zumindest einem thermoplastischen Kunststoff besteht. Erfindungsgemäß sind die Verstärkungsfasern Endlosfasern.

Der erfindungsgemäße Zaunpfahl ist durch den röhrenförmigen Aufbau innen hohl und somit in Kombination mit einer geringen Rohrwanddicke, welche durch die Faserverstärkung der inneren Schicht möglich ist, besonders leicht. Durch den geringen Materialverbrauch ist der erfindungsgemäße Zaunpfahl außerdem kostengünstig. Durch die äußere Schicht, mit welcher die innere Schicht zur Umgebung hin ummantelt wird, ist der Zaunpfahl außerdem UV-stabil und es können sich keine Splitter oder Verstärkungsfasern aus der inneren Schicht lösen, welche zu Verletzungen führen könnten. Durch den Einsatz von thermoplastischem Kunststoff ist der Zaunpfahl sehr gut recycelbar. Außerdem gewährleistet das thermoplastische Material eine nachträgliche Verformbarkeit durch das Einbringen von Wärme. Durch den faserverstärkten Verbundwerkstoff ist der Zaunpfahl außerdem mechanisch sehr stabil und insbesondere steif. Aufgrund der thermoplastischen Matrix wird eine hohe Zug- und Scherfestigkeit erreicht und auch ein hoher Elastizitätsmodul. In Kombination mit der hohen Steifigkeit durch die Verstärkungsfasern ergibt sich so ein mechanisch extrem stabiler Zaunpfahl.

Der Querschnitt des Rohrelements ist bevorzugt rund und besonders bevorzugt kreisförmig, kann aber auch eckig ausgestaltet werden. Das Material der Verankerungsvorrichtung ist bevorzugt Metall oder Kunststoff. Die Schichtstruktur des Rohrelements umfasst erfindungsgemäß zumindest eine innere und eine äußere Schicht. Es ist jedoch auch denkbar, dass die Schichtstruktur mehr als zwei Schichten umfasst. Insbesondere wäre es auch denkbar eine weitere Schicht an der inneren Oberfläche, welche zum Innenraum des Rohrelements weist, anzuordnen. Auch wäre es denkbar, an der Oberfläche der äußeren Schicht des Rohrelements, welche zur äußeren Umgebung gerichtet ist, eine weitere Schicht anzubringen und/oder weitere Schichten zwischen der inneren und äußeren Schicht anzuordnen.

Nach einer bevorzugten Ausführungsform weist das Monomer des thermoplastischen Kunststoffes der Matrix der inneren Schicht eine Viskosität unter 10 mPas, bevorzugt unter 7 mPas, besonders bevorzugt von 5 mPas auf. Die genannte Viskosität wird bevorzugt bei 70°C erreicht. Durch die geringe Viskosität des Monomers des thermoplastischen Kunststoffes kann eine gute Benetzung der Verstärkungsfasern im Herstellungsprozess gewährleistet werden. Durch die gute Benetzung der Fasern kann eine mechanisch besonders stabile Verbindung zwischen den Verstärkungsfasern und der thermoplastischen Matrix hergestellt werden, was zu einem besonders stabilen Material und somit zu besseren mechanischen Eigenschaften des Zaunpfahls führt.

Der thermoplastische Kunststoff der Matrix und/oder der äußeren Schicht kann außerdem einen oder mehrere Hilfsstoffe enthalten. Hilfsstoffe können insbesondere sein: Aktivatoren und Katalysatoren für die Polymerisationsreaktion, Farbpigmente, Stabilisatoren, Entschäumer, Stoffe zur Einstellung der Viskosität des Monomers, Stoffe zur Verbesserung der mechanischen Eigenschaften des Polymers.

Nach einer bevorzugten Ausführungsform ist der thermoplastische Kunststoff der Matrix der inneren Schicht ein Polyamid, bevorzugt Polyamid 6 (PA6). PA6 ist ein sehr gut recycelbarer thermoplastischer Kunststoff. PA wird aus dem Monomer ε-Caprolactam hergestellt, welches eine sehr niedrige Viskosität zwischen 5 - 10 mPas aufweist und eine entsprechend gute Benetzung der Verstärkungsfasern ermöglicht. Alternativ zu PA6 oder Polyamid ist auch eine Verwendung von Polypropylen (PP) denkbar.

Nach einer bevorzugten Ausführungsform sind die in der Matrix eingebetteten Verstärkungsfasern mit ihrer Faserlängsachse parallel zur Rohrelementlängsachse ausgerichtet. Durch die Ausrichtung der Fasern, ähnlich einer Textur, parallel zur Rohrelementlängsachse wird die Steifigkeit des Rohrelements verbessert. Zwar kann auch eine Verbesserung der mechanischen Eigenschaften durch das Einbringen von ungerichteten Fasern erzeugt werden, durch parallel zur Rohrelementlängsachse ausgerichtete Verstärkungsfasern können die mechanischen Eigenschaften jedoch weiter verbessert werden. Insbesondere kann somit die Steifigkeit weiter erhöht werden.

Alternativ können die Verstärkungsfasern in der Matrix auch um den Innenraum des Rohrelements herumgewickelt oder geflochten werden. Hierbei verlaufen die Faserlängsachsen in einem Winkel kleiner 89° zur Rohrelementlängsachse. Hier ist es einerseits denkbar, dass die Verstärkungsfasern zueinander parallel verlaufen und Helix-förmig um den Innenraum herum in der Matrix der inneren Schicht angeordnet sind. Alternativ können die Verstärkungsfasern auch miteinander verflochten sein und so eine Flechtstruktur bilden.

Erfindungsgemäß wird eine Endlosfaser als Verstärkungsfaser verwendet. Durch Verwenden einer Endlosfaser kann der Zaunpfahl besonders einfach hergestellt werden. Hierbei kann das Rohrelement als Endlosrohrelement hergestellt werden, welches dann in einem folgenden Prozessschritt in Rohrelemente mit gewünschter Länge zersägt wird.

Nach einer bevorzugten Ausführungsform ist die Verstärkungsfaser eine Glasfaser. Glasfasern zeichnen sich durch einen geringen Preis aus, wodurch der Zaunpfahl entsprechend kostengünstig herstellbar ist. Auch sind Glasfasern verfügbar, insbesondere auch als Langund Endlosfasern. Es ist auch denkbar, dass andere Verstärkungsfasern aus anorganischen oder auch organischen Materialien verwendet werden.

Nach einer bevorzugten Ausführungsform beträgt der Volumengehalt der Verstärkungsfaser im Verbundwerkstoff 65-80 Vol.%. Ein Fasergehalt von 65-80 Vol.% stellt einen vergleichsweise hohen Fasergehalt dar. Durch diesen hohen Fasergehalt kann eine hohe Steifigkeit des Bauteils erreicht werden. Faservolumengehälter von mehr als 80 Vol.% sind aktuell nur schwer herstellbar. Fasergehälter von unter 65 Vol.% liefern nicht die gewünschte Steifigkeit des fertigen Zaunpfahls. Bevorzugt beträgt der Faservolumengehalt der Verstärkungsfaser im Verbundwerkstoff 65-75 Vol.%, besonders bevorzugt von 68-72 Vol.%. Im Bereich dieser Faservolumengehalte kann eine besonders gute Steifigkeit bei gleichzeitiger guter Herstellbarkeit, insbesondere bei Verwendung von Polyamid 6 als Matrixwerkstoff erreicht werden.

Alternativ ist es denkbar, dass der Volumengehalt der Verstärkungsfaser im Verbundwerkstoff unter 60 Vol.% beträgt. Bevorzugt beträgt der Volumengehalt der Verstärkungsfaser im Verbundwerkstoff 20 - 60 Vol.%, besonders bevorzugt 30 - 50 Vol.% und insbesondere 30 - 40 Vol.%. Durch einen Volumengehalt der Verstärkungsfaser unter 60 Vol.% kann eine Flexibilität des Zaunpfahls erreicht werden. Durch diese Flexibilität ist der Zaunpfahl windbeständiger, da eine Kraftaufnahme durch den Zaunpfahl selbst erfolgen kann. Dies führt zu dem Vorteil, dass sich die Verankerungsvorrichtung bei Wind nicht lockert und der Zaunpfahl stabil verankert bleibt. Durch die geringere Dichte des Kunststoffes im Vergleich zu den Verstärkungsfasern ist der Pfahl in dieser Ausführungsform auch leichter. Für Anwendungen in entsprechenden Umgebungen können diese Vorteile den Nachteil der verringerten Stabilität auf Grund der geringeren Steifigkeit aufwiegen.

Nach einer bevorzugten Ausführungsform ist der thermoplastische Kunststoff der äußeren Schicht ein Polyamid. Durch die Verwendung von Polyamid auch für den Kunststoff der äußeren Schicht besteht die äußere Schicht aus derselben Materialart wie die Matrix der inneren Schicht. Durch die gleichen Materialarten ergibt sich eine sehr gute Recyclingfähigkeit des Zaunpfahls. Es ist auch denkbar eine Mischung von verschiedenen thermoplastischen Kunststoffen für die äußere Schicht zu verwenden und/oder die äußere Schicht abschnittsweise aus unterschiedlichen Materialien herzustellen.

Nach einer bevorzugten Ausführungsform enthält der thermoplastische Kunststoff der äußeren Schicht Farbpigmente. Das bevorzugte PA6 wird bevorzugt in der Farbe "natur" verwendet, welche gelblich-weiß gefärbt und im sichtbaren Spektrum und im UV-Spektrum opak ist. Zusätzliche Farbpigmente zur Einfärbung von thermoplastischen Kunststoffen sind teuer. Im Sinne geringer Materialkosten ist daher vorteilhaft wenig Farbpigment zu verwende, um den gesamten Zaunpfahl einzufärben. Durch ausschließliche Einfärbung der dünnen äußeren Schicht kann eine komplette Einfärbung des Zaunpfahls optisch erreicht werden, bei gleichzeitiger sparsamer Verwendung des teuren Pigments. Es ist außerdem denkbar das Farbpigment nur in Teilbereiche der äußeren Schicht einzubringen. Auf diese Weise kann ein farbiges Muster erzielt werden. Denkbar wäre ein einzelner oder mehrere Striche parallel zur Rohrelementlängsachse. Jedes andere Muster ist jedoch ebenfalls denkbar. Auch ist denkbar, dass die äußere Schicht verschiedene Farbpigmente enthält und bevorzugt ein mehrfarbiges Muster.

Es ist außerdem denkbar die äußere Schicht zumindest teilweise oder vollständig retroreflektierend auszugestalten. Hierfür enthält der thermoplastische Kunststoff im retroreflektierenden Bereich bevorzugt Glaskugeln und ist transparent oder transluzent. Bevorzugt enthält der Kunststoff der äußeren Schicht in diesem Fall einen UV-blockierendem Hilfsstoff zumindest in den transparenten bzw. transluzenten Bereichen. So ist das Rohrelement trotz transparenter bzw. transluzenter Bereiche weiterhin UV-stabil. Alternativ kann auch eine weitere UV-blockierende thermoplastische Kunststoffschicht in der Schichtstruktur zwischen der inneren und der äußeren Schicht angeordnet werden. Diese Schicht ist bevorzugt aus Polyamid, besonders bevorzugt PA 6, oder PP. Die retroreflektierenden Bereiche können bevorzugt in das zuvor beschriebene ein- oder mehrfarbige Muster integriert werden.

In einer bevorzugten Ausführungsform weist der Zaunpfahl einen Adapter auf, mit welchem die Verankerungsvorrichtung am Rohrelement befestigt ist, wobei der Adapter aus einem Polyamid besteht. So fern als Material für die Verankerungsvorrichtung Metall gewählt wird, ist dieser nur mittels eines Adapter am Rohrelement befestigbar. Der Adapter wird dabei auf das Rohrelement aufgesteckt. Zur sichereren Befestigung ist es auch möglich, den Adapter am Rohrelement mittels Ultraschallschweißen zusätzlich zu befestigen. Die Verankerungsvorrichtung aus Metall wird in den Adapter eingepresst. Durch die Verwendung eines Adapters aus Polyamid wird auch für den Adapter bevorzugt dasselbe Material verwendet, welches bereits für die Matrix im Verbundwerkstoff und die äußere Schicht des Rohrelements verwendet wird. So wird die gute Recyclingfähigkeit des Zaunpfahls weiter verbessert. Bevorzugt besteht der Adapter aus PA 6 oder PA 6.6. Alternativ ist es auch möglich andere Materialien für den Adapter zu verwenden. Bevorzugt besteht der Adapter aus zumindest einem thermoplastischen Kunststoff, besonders bevorzugt Polypropylen (PP). Bei einer Ausführung der Verankerungsvorrichtung aus demselben Kunststoff wie das Rohrelement, ist es auch möglich die Verankerungsvorrichtung einstückig mit dem Rohrelement auszuführen. Dabei wird die Verankerungsvorrichtung bevorzugt direkt bei Anbringung der äußeren Schicht mit ausgeformt oder nachträglich durch Umformung eines Endes des Rohrelements ausgeformt.

Nach einer bevorzugten Ausführungsform weist der Zaunpfahl eine Kappe auf, welche am Rohrelementende des Rohrelements angeordnet ist, welches der Verankerungsvorrichtung gegenüber liegt, wobei die Kappe aus einem Polyamid hergestellt ist. Alternativ ist es auch möglich andere Materialien für den Adapter zu verwenden. Bevorzugt besteht die Kappe aus zumindest einem thermoplastischen Kunststoff, besonders bevorzugt Polypropylen (PP). Bevorzugt wird das Rohrelement als Endlosrohrelement, bestehend aus der inneren und äußeren Schicht, hergestellt und anschließend in einem weiteren Prozessschritt in einzelne Rohrelemente mit der gewünschten Länge zersägt. Durch diese bevorzugte Herstellungsmethode ist die Schnittkante an den Rohrelementenden nicht von der äußeren Schicht ummantelt. Vielmehr bildet die faserverstärkte innere Schicht einen Teil der Schnittfläche. Hier wird zwar durch die bündig bis zur Schnittfläche angeordnete äußere Schicht ein Ausfransen oder Ausbrechen der Verstärkungsfasern aus der inneren Schicht weitgehend verhindert, kann jedoch nicht völlig ausgeschlossen werden. Um ein mögliches Verletzungsrisiko auszuschließen, kann die Kappe verwendet werden. Die Kappe deckt bevorzugt die gesamte Schnittkante des Rohrelements ab. Bevorzugt verschließt die Kappe durch das Anbringen am oberen Rohrelementende den Innenraum des Rohrelements zur äußeren Umgebung. Bevorzugt ist die Kappe aus Polyamid hergestellt, um die Recyclingfähigkeit des Zaunpfahls zu gewährleisten. Bevorzugt wird die Kappe auf das entsprechende Rohrelementende aufgesteckt.

Nach einer bevorzugten Ausführungsform weist der Zaunpfahl Befestigungsmittel für ein Zaunnetz oder Zaunband auf, welche am Rohrelement angeordnet sind. Das Befestigungsmittel ist bevorzugt als Clip oder Haken ausgeführt. Der Clip sowie auch der Haken weisen bevorzugt ein Hakenelement auf, an welchem das Zaunnetz oder das Zaunband eingehakt werden kann. Bei dem Haken wird das Hakenelement dabei bevorzugt einstückig mit der äußeren Schicht ausgebildet. Dies kann entweder durch direktes Einformen der Haken bei der Aufbringung der äußeren Schicht auf die innere Schicht realisiert werden oder durch nachträgliches Umformen der thermoplastischen äußeren Schicht. Das direkte Einformen der Haken erfolgt bevorzugt mittels Spritzgusses. Der Clip stellt bevorzugt ein eigenständiges Bauteil dar, welches lösbar mit dem Rohrelement verbindbar ist. Bevorzugt wird der Clip durch eine Klemmkraft am Rohrelement gehalten. Es ist dabei auch denkbar andere Befestigungsmittel, welche lösbar am Rohrelement anbringbar sind, zu verwenden.

Bevorzugt weist das Rohrelement eingeformte Vertiefungen auf, welche Rastpositionen für die lösbar anbringbaren Befestigungsmittel darstellen. Hierdurch ist es möglich, die Befestigungsmittel in definierten Abständen zueinander am Rohrelement zu befestigen, welche bevorzugt an eine Maschenweite des Zaunnetzes angepasst sind.

Alternativ ist es durch die erfindungsgemäße Materialwahl auch möglich das Befestigungsmittel als Loch im Rohrelement auszuführen. Durch die Nachträgliche Einbringung des Lochs entsteht auf Grund des thermoplastischen Kunststoffes keine Sollbruchstelle wie z.B. bei PVC.

Mobile Weidezäune bestehen wie zuvor beschrieben aus Zaunpfählen und einem Zaunnetz, Zaunband, oder Kordeln oder Seilen, meist gezwirnt oder geflochten, welche zwischen den einzelnen Zaunpfählen, horizontal verlaufend verspannt wird. Im Vergleich zu permanenten Zäunen sind die Zaunpfähle mobiler Weidezäune schmal und leicht. Das Zaunnetz oder - band kann leicht aufgerollt oder zusammengelegt werden. Auf diese Art und Weise wird die gute Transportierbarkeit des mobilen Weidezauns gewährleistet. Durch diesen Aufbau mit wenig Material ist der mobile Weidezaun jedoch im Vergleich mit permanenten Zäunen insbesondere im Dunkeln ggf. schlechter sichtbar.

Aus dem Stand der Technik sind passiv beleuchtete mobile Weidezäune bekannt, deren Sichtbarkeit durch die Verwendung von Reflektoren verbessert wird. Bei Nutzung auf abgelegenen Weiden oder in sonstigen unbeleuchteten Gebieten, wie z.B. Skigebieten, Baustellen oder privaten Grundstücken, ist eine passive Beleuchtung jedoch oft nicht ausreichend. Ebenfalls bekannt sind aktive Beleuchtungen für mobile Weidezäune. Hierbei wird ein Leuchtelement am Zaunnetz oder -band befestigt. Hier besteht der Nachteil, dass die Leuchtelemente z.B. leicht verloren gehen können, oder beschädigt werden und eine ausreichende Sichtbarkeit des Zauns dann nicht mehr gewährleistet ist.

Es ist daher wünschenswert einen mobilen Weidezaun bereitzustellen, welcher eine aktive Beleuchtung umfasst, welche sicher am Weidezaun anbringbar ist und so die Sicherheit des Zauns weiter verbessert. Dabei darf die Stabilität, Mobilität und Kosteneffizienz des Zauns nicht verschlechtert werden.

Dies wird mit der nachfolgend beschriebenen bevorzugten Ausführungsform erreicht. Gemäß dieser bevorzugten Ausführungsform ist das Rohrelement zumindest teilweise lichtdurchlässig und der Zaunpfahl umfasst eine Leuchtvorrichtung, welche im Innenraum des Rohrelements angeordnet ist. Diese Ausführungsform ist dabei mit allen zuvor beschriebenen Ausführungsformen des Zaunpfahls kombinierbar.

Durch die Leuchtvorrichtung im Innenraum des Rohrelements in Kombination mit der Lichtdurchlässigkeit kann der Zaunpfahl von innen heraus beleuchtet werden. Hierdurch ergeben sich diverse Vorteile: Zum einen ist die Leuchtvorrichtung im Innenraum des Rohrelements vor der Witterung geschützt und dort besonders verliersicher angebracht. Außerdem ergibt sich durch die Beleuchtung aller Zaunpfähle ein aktiv beleuchtetes, regelmäßiges Muster, was von Tieren und Menschen leicht als Zaun erkannt wird und seine Warnfunktion daher optimal erfüllen kann. Außerdem ist durch eine aktive Beleuchtung der Zaun aus weiter Entfernung sichtbar. In Kombination mit dem leicht als Zaun erkennbaren Beleuchtungsmuster der Zaunpfähle, kann z.B. aus großer Entfernung erkannt werden, ob der Zaun noch steht oder z.B. durch Witterung umgefallen ist. Diese Erkennung ist bei einem auf einem Berg aufgestellten Zaun bei Nacht z.B. oft noch aus dem Tal möglich.

Die Lichtdurchlässigkeit des Rohrelements kann entweder durch ein zumindest teilweise transparentes oder zumindest teilweise transluzentes Rohrelement erreicht werden. Sofern dafür PA 6 in der transparenten oder transluzenten Variante statt der opaken Naturfarbe verwendet wird, ist das PA 6 auch im UV-Bereich transparent bzw. transluzent. Um dennoch die gewünschte UV-Stabilität zu erreichen, ist es denkbar, dass der Kunststoff der äußeren und ggf. auch der inneren Schicht entweder einen UV-blockierenden Zusatz enthält und/oder eine zusätzliche, im sichtbaren Bereich transparente UV-Schutzbeschichtung auf das Rohrelement aufgebracht ist.

Zur Abwehr von Wildtieren wird bevorzugt blaues Licht von der Leuchtvorrichtung emittiert. Das emittierte Licht kann jedoch auch jede andere Färbung aufweisen oder weiß sein. Es ist außerdem denkbar, dass das Rohrelement nur teilweise lichtdurchlässig ist. Bevorzugt sind die lichtdurchlässigen Bereiche und die lichtundurchlässigen Bereiche in einem Muster angeordnet. Das Muster kann z.B. ein Warnmuster sein. Es ist außerdem denkbar, dass das Rohrelement transparent und/oder transluzent ist. Dabei können transparente und transluzente Bereiche insbesondere auch in einem Muster angeordnet sein. Es ist weiterhin denkbar, dass das Rohrelement farblos ausgestaltet ist, oder zumindest teilweise eingefärbt ist. Bevorzugt sind die Pigmente für die Einfärbung nur in der äußeren Schicht des Rohrelements angeordnet.

Die Stromversorgung der Leuchtvorrichtung kann bevorzugt über eine Batterie in oder an der Leuchtvorrichtung selbst sichergestellt werden. Sofern es sich um einen Elektrozaun handelt, kann die Leuchtvorrichtung auch an die Stromversorgung des Elektrozauns angeschlossen sein. Dies hat den Vorteil, dass keine gesonderten Batterien für den Betrieb der Leuchtvorrichtungen notwendig sind. Es ist auch denkbar, dass der Zaunpfahl z.B. an Kappe, Rohrelement oder Adapter, ein Solarmodul und einen Akku umfasst, mit welchem durch Sonnenlicht Strom für den Betrieb der Leuchtvorrichtung erzeugt und gespeichert werden kann.

Nach einer weiteren bevorzugten Ausführungsform ist die Leuchtvorrichtung zerstörungsfrei ablösbar im Rohrelement angeordnet. In dieser Ausführungsform ist die Leuchtvorrichtung somit in den Zaunpfahl ein- und ausbaubar. Hierdurch kann der Eigentümer des Zauns selbst Leuchtvorrichtungen in bestimmten Zaunpfählen anbringen. Dabei ist dies sowohl beim aufgestellten Zaun möglich als auch im abgebauten Zustand des Zauns. Z.B. können so nur die Zaunpfähle entlang eines Weges auch nachträglich mit Leuchtvorrichtungen versehen werden, ohne dass die Zaunpfähle selbst ausgetauscht werden müssen. Auch ist es möglich die Leuchtvorrichtungen für den Transport oder zur Reparatur oder zum Tausch auszubauen, oder andere Zaunbereiche zu beleuchten. Bevorzugt wird diese Ausführungsform mit der Ausführungsform des Zaunpfahls mit der Kappe kombiniert. Zum einen ist der Zaunpfahl damit oben durch die Kappe geschlossen und die Leuchtvorrichtung damit vor Nässe geschützt. Zum anderen kann die Leuchtvorrichtung selbst an der Kappe befestigt werden, sodass durch Abnehmen der Kappe vom Rohrelement die Leuchtvorrichtung in einfacher Weise aus dem Rohrelement entnommen werden kann. Bevorzugt ist die Kappe in diesem Fall lösbar am Rohrelement befestigt. Bevorzugt weist die Kappe ein Befestigungsmittel für die Leuchtvorrichtung, z.B. in der Form eines Klemmelements oder eines Hakens, auf.

Alternativ kann die Leuchtvorrichtung aber auch fest mit dem Zaunpfahl verbunden sein. Hier kommt neben der festen Verbindung mit dem Rohrelement auch eine feste Verbindung mit der Kappe oder dem Adapter in Betracht. Beispielsweise kann die Leuchtvorrichtung fest mit dem Rohrelement, der Kappe oder dem Adapter vergossen sein.

Bevorzugt ist die Leuchtvorrichtung eine LED-Leuchtvorrichtung. LEDs sind kostengünstige und robuste Leuchtmittel, die sich durch einen geringen Stromverbrauch auszeichnen. LEDs sind außerdem in verschiedenen Farben verfügbar. So kann eine Leuchtvorrichtung, welche in mehreren Farben oder einer bestimmten Farbe leuchtet, in einfacher Weise realisiert werden.

In einer bevorzugten Ausführungsform ist die Leuchtvorrichtung eine LED-Leuchtvorrichtung in Form eines Stabs oder eines Bands. Ein LED-Stab oder -Band kann auf Grund der länglichen Form besonders einfach im Innenraum des Rohrelements angeordnet werden. Außerdem entspricht die Länge des LED-Stabs oder -Bands bevorzugt der Länge des Rohrelements. So kann der Zaunpfahl auf der gesamten Länge beleuchtet werden.

Weitergehend umfasst die Leuchtvorrichtung bevorzugt eine Zeitschaltuhr und/oder einen Helligkeitssensor und/oder einen Bewegungssensor. So kann die Leuchtvorrichtung automatisch zu einer bestimmten Uhrzeit und/oder bei einer bestimmten Helligkeit ein- bzw. ausgeschaltet werden und/oder wenn sich Mensch oder Tier dem Zaun nähern. So kann sichergestellt werden, dass die Leuchtvorrichtung nur bei entsprechendem Bedarf Licht emittiert. Dies ist zum einen energieeffizient und verhindert zum anderen unnötige Lichtverschmutzung.

Die innere Schicht des Zaunpfahls lässt sich besonders vorteilhaft durch das Verfahren der in-situ Pultrusion herstellen. Die äußere Schicht wird bevorzugt im Anschluss daran in einem Spritzgussprozess aufgebracht. Das so entstandene Endlosrohrelement wird dann bevorzugt in einem abschließenden Sägeschritt in die einzelnen Rohrelemente in der gewünschten Länge getrennt.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig. 1: eine Darstellung des mobilen Weidezauns;
- Fig. 2: eine Darstellung des Zaunpfahls in drei verschiedenen Perspektiven;
- Fig. 3: eine Schnittdarstellung des Zaunpfahls in zwei verschiedenen Perspektiven mit einer Schnittebene A-A entlang der Rohrelementlängsachse;
- Fig. 4: eine Schnittdarstellung des Zaunpfahls mit einer Schnittebene B-B senkrecht zur Rohrelementlängsachse inklusive einer vergrößerten Darstellung eines Teilbereichs;
- Fig. 5: eine Darstellung des Zaunpfahls in der Ausführungsform mit verschiedenen Befestigungsmitteln;
- Fig. 6: eine Darstellung des Zaunpfahls in der Ausführungsform mit Leuchtvorrichtung;
- Fig. 7: eine Darstellung einer Ausführungsform der Kappe mit daran angeordneter Leuchtvorrichtung.

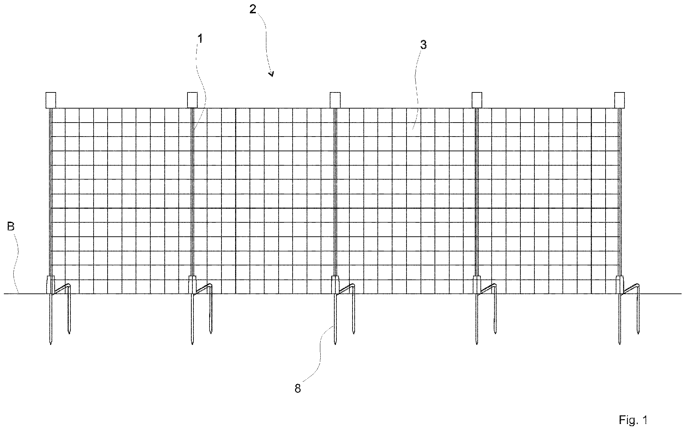

Figur 1 zeigt eine Darstellung des mobilen Weidezauns 2 gemäß einer Ausführungsform. Der Weidezaun 2 umfasst Zaunpfähle 1 und ein Zaunnetz 3 oder alternativ Zaunbänder, welche zwischen den im Boden B steckenden Zaunpfählen 1 horizontal verlaufend verspannt werden. Die Zaunpfähle 1 werden dabei mit der Verankerungsvorrichtung 8 im Boden B befestigt. Das Zaunnetz 3 oder das Zaunband ist mithilfe von Befestigungsmitteln 10 an den Zaunpfählen 1 befestigt.

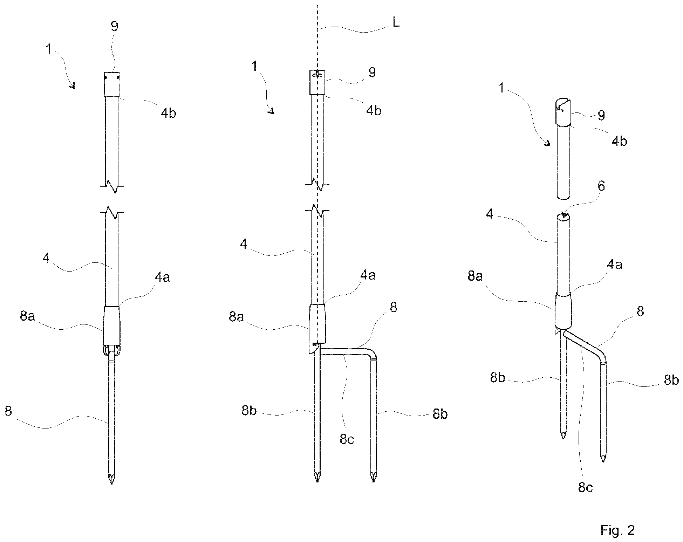

Figur 2 zeigt eine Darstellung des Zaunpfahls 1 gemäß einer Ausführungsform in drei verschiedenen Perspektiven. Der Zaunpfahl 1 umfasst ein Rohrelement 4 und eine Verankerungsvorrichtung 8. Das Rohrelement 4 ist rohrförmig und verläuft entlang einer Rohrelementlängsachse L in vertikaler Richtung. Das Rohrelement 4 ist innen hohl. Das Rohrelement 4 umschließt somit ein Innenraum 6. Bevorzugt umfasst der Zaunpfahl 1 einen Adapter 8a, mit welchem die Verankerungsvorrichtung 8 am Rohrelement 4 befestigt ist.

Die Verankerungsvorrichtung 8 weist in der gezeigten Ausführungsform zwei parallel verlaufende Erdspieße 8b auf. Einer der Erdspieße 8b verläuft dabei in Verlängerung des Rohrelements 4 vertikal nach unten entlang der Rohrelementlängsachse L. Der zweite Erdspieß 8b ist bevorzugt hierzu parallel angeordnet und beabstandet. Bevorzugt ist der zweite Erdspieß 8b über ein horizontal verlaufendes Brückenelement 8c mit dem ersten Erdspieß 8b verbunden. Im Boden angeordneten Zustand sind die beiden Erdspieße 8b im Erdreich versenkt, während das horizontal verlaufende Brückenelement 8c auf der Bodenoberfläche aufliegt. Das Brückenelement 8c in Verbindung mit dem zweiten Erdspieß 8b sorgt zum einen für einen stabileren Stand des Zaunpfahls 1. Zum anderen kann das Brückenelement 8c zum Eintreten der Verankerungsvorrichtung 8 in den Boden verwendet werden. Es ist jedoch auch denkbar, dass der Zaunpfahl 1 nur einen Erdspieß 8b an der Verankerungsvorrichtung 8 aufweist. In diesem Fall ist bevorzugt nur der in Verlängerung der Rohrelementlängsachse L verlaufende Erdspieß 8b vorhanden und optional das Brückenelement 8c zum Eintreten in den Boden. Der zweite dazu beabstandete Erdspieß 8b ist in dieser Ausführungsform nicht vorhanden.

Bevorzugt ist der Bodennagel 8 über einen Adapter 8a am Rohrelement 4 befestigt. Die Verankerungsvorrichtung 8 ist hierbei mit seinem Adapter 8a bevorzugt an einem Rohrelementende 4a am Rohrelement 4 befestigt. Bevorzugt ist die Verankerungsvorrichtung am unteren Rohrelementende 4a angeordnet. Das obere Rohrelementende 4b weist bevorzugt eine Kappe 9 auf. Es ist jedoch auch denkbar, den Zaunpfahl 1 ohne Kappe 9 zu verwenden.

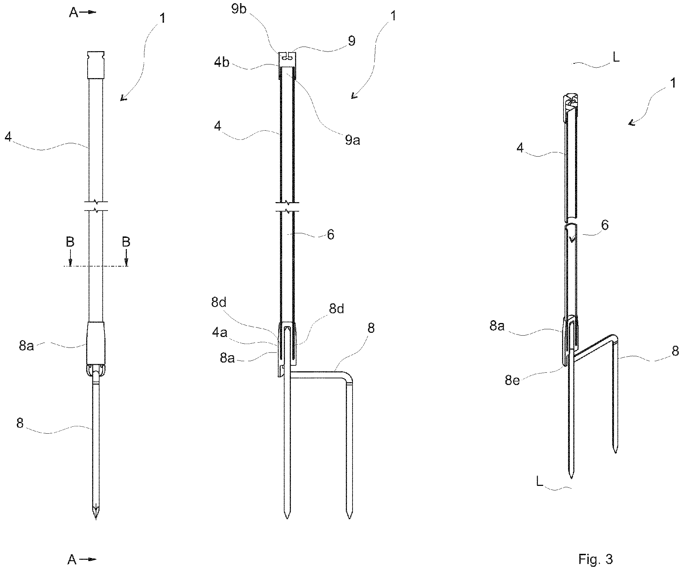

Figur 3 zeigt eine Schnittdarstellung des Zaunpfahls 1 in zwei verschiedenen Perspektiven mit einer Schnittebene A-A entlang der Rohrelementlängsachse L. In der linken Abbildung in Figur 3 ist die Schnittebene A-A an der schematischen Zeichnung eines Zaunpfahl 1 verdeutlicht. Die mittlere Darstellung zeigt eine Schnittdarstellung entlang der Schnittachse A-A. Die rechte Abbildung zeigt die gleiche Schnittdarstellung, jedoch in einer perspektivischen Ansicht. Die Schnittdarstellungen verdeutlichen die rohrförmige Ausführung des Rohrelements 4. Das Rohrelement 4 weist einen runden Querschnitt senkrecht zur Rohrelementlängsachse L auf.

Der Adapter 8a wird bevorzugt auf das Rohrelement 4 aufgesteckt. Hierbei wird das untere Rohrelementende 4a in vorgesehene Nuten 8d des Adapters 8a eingesteckt. Die Verbindung von Adapter 8a und Rohrelement 4 ist somit eine Steckverbindung. Der Adapter 8a wird bevorzugt durch Klemmkraft am Rohrelement 4 gehalten. Um die Befestigung des Adapters 8 am Rohrelement 4 zu verbessern, sind alternative Befestigungsmethoden oder zusätzliche Befestigungsmethoden denkbar, z.B. Ultraschallschweißen. Der Adapter 8a weist außerdem einen Hakenfortsatz 8e auf. Mit dem mit Hilfe des Hakenfortsatzes 8e lässt sich zwischen den Zaunpfählen 1 des Weidezauns 2 eine Schnur verspannen. Dabei wird die Schnur am Hakenfortsatz 8a eingehakt und damit am Zaunpfahl 1 befestigt. Auch ist es denkbar, das Zaunnetz 3 oder das Zaunband in den Haken des Hakenfortsatzes 8e einzuhaken und damit zu befestigen.

Bevorzugt weist der Zaunpfahl 1 eine Kappe 9. Die Kappe 9 ist bevorzugt am oberen Rohrelement Ende 4b angeordnet. Bevorzugt wird die Kappe 9 auf das obere Rohrelementende 4b aufgesteckt. Die Kappe 9 wird dabei bevorzugt durch eine Klemmkraft am oberen Rohrelementende 4b des Rohrelements 4 fixiert. Die Kappe 9 verdeckt bevorzugt das gesamte obere Rohrelementende 4b, in dem es das Rohrelementende 4b umschließt. Dies bedeutet, dass die Kappe 9 eine innere Ausnehmung 9a aufweist, in die das Rohrelement 4 mit seinem oberen Rohrelementende 4b eingesteckt wird. Auf diese Weise umschließt die Kappe 9 die gesamte senkrecht zur Rohrelementlängsachse L angeordnete Schnittfläche des oberen Rohrelementendes 4b. An der Schnittfläche werden die einzelnen Rohrelemente 4 voneinander aus einem Endlosrohrelement abgetrennt. Bevorzugt weist die Kappe 9 eine zweite Ausnehmung 9b auf. Diese zweite Ausnehmung 9b ist bevorzugt auf der gegenüberliegenden Seite der ersten Ausnehmung 9a angeordnet, in anderen Worten auf der Kappenoberseite. In diese zweite Ausnehmung 9b ist eine Schnur, ein Zaunband oder ein Zaunnetz 3 einhängbar. Hierzu weist die zweite Ausnehmung 9b eine schmale, über den gesamten Durchmesser der Kappenoberseite verlaufende Öffnung zur Kappenoberseite hin auf. Die zweite Ausnehmung verläuft weitergehend entlang der Rohrelementlängsachse L in Richtung der Kappenunterseite und verbreitert sich dabei quer zur Rohrelementlängsachse L.

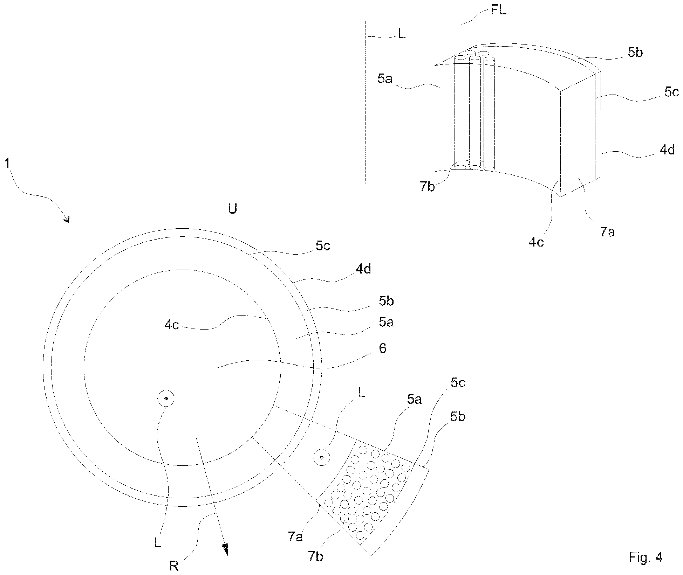

Figur 4 zeigt eine Schnittdarstellung des Zaunpfahls 1 mit einer Schnittebene B-B (vgl. Fig 3) senkrecht zur Rohrelementlängsachse L inklusive einer vergrößerten Darstellung eines Teilbereichs der Schichtstruktur 5, sowohl einmal entlang der Schnittebene B-B und einmal in perspektivischer Darstellung. Das Rohrelement 4 weist eine Schichtstruktur 5 auf. Die Schichtstruktur 5 umfasst dabei bevorzugt eine innere Schicht 5a und eine äußere Schicht 5b. Die innere Schicht 5a ist dabei, in radialer Richtung R des Rohrelements 4 betrachtet, zum Innenraum 6 des Rohrelements 4 angeordnet. Die äußere Schicht 5b ist, in radialer Richtung R betrachtet, außen am Rohrelement 4 angeordnet. In anderen Worten stellt somit die innere Schicht 5a die innere Oberfläche 4c des Rohrelements 4 dar, welche zum Innenraum 6 weist. Die äußere Schicht 5b stellt dabei die äußere Oberfläche 4d des Rohrelements 4 zur Umgebung U dar. Die innere Schicht 5a und die äußere Schicht 5b besitzen eine gemeinsame Grenzfläche 5c, an welcher sie flächig aneinander angeordnet sind.

Die Wandstärke der inneren Schicht 5a gemessen in radialer Richtung R ist bevorzugt größer als die Wandstärke der äußeren Schicht 5b. Die Wandstärke der inneren Schicht 5a beträgt, bevorzugt 1 bis 2 mm. Die Wandstärke der äußeren Schicht 5b beträgt, bevorzugt 0,1-0,3 mm, besonders bevorzugt 0,2 mm. Damit ergibt sich eine bevorzugte Gesamtwandstärke der Schichtstruktur 5 von 1,1 bis 2,3 mm. Der Durchmesser des Rohrelements 4 beträgt, bevorzugt zwischen 14 und 25 mm. Besonders bevorzugt beträgt der Durchmesser des Rohrelements 4 14,4 mm, 19 mm oder 22 mm.

In der vergrößerten Darstellung des Teilbereichs der Schnittfläche B-B ist der genaue Aufbau der inneren Schicht 5a und der äußeren Schicht 5b erkennbar. Die äußere Schicht 5b besteht aus zumindest einem thermoplastischen Kunststoff, bevorzugt Polyamid. Die innere Schicht 5a umfasst eine Matrix 7a, welche aus einem thermoplastischen Kunststoff besteht. Bevorzugt ist der thermoplastische Kunststoff Polyamid. Die innere Schicht 5a stellt einen Verbundwerkstoff 7 dar, welcher neben der Matrix 7a Verstärkungsfasern 7b umfasst. Die Verstärkungsfasern 7b sind in der Matrix 7a eingebettet und werden von dieser vollständig umschlossen. Bevorzugt besteht die Matrix 7a aus Polyamid 6 (PA6). Die Verstärkungsfasern 7b sind bevorzugt Endlosglasfasern. Bevorzugt sind die Verstärkungsfasern 7b parallel zur Rohrelementlängsachse L ausgerichtet. Bevorzugt verlaufen die Endlosfasern parallel zur Rohrelementlängsachse L über die gesamte Länge des Rohrelements 4 in der inneren Schicht 5a, also vom oberen Rohrelementende 4b bis zum unteren Rohrelementende 4a. In der perspektivischen Darstellung des vergrößerten Teilbereichs lässt sich die Ausrichtung der Verstärkungsfasern 7b gut erkennen. Die Verstärkungsfasern 7b verlaufen mit ihrer Faserlängsachse FL parallel zur Rohrelementlängsachse L. Die Verstärkungsfasern 7b sind dabei in der inneren Schicht 5a eingebettet. Die äußere Schicht 5b schließt sich, in radialer Richtung R betrachtet, außen an die innere Schicht 5a. Dabei verläuft sie flächig parallel zur inneren Schicht 5a. Dabei bilden die innere Schicht 5a auch die äußere Schicht 5b eine gemeinsame Grenzfläche 5c. Die äußere Schicht 5b stellt somit eine Beschichtung der äußeren Mantelfläche 5c der inneren Schicht 5a des Rohrelements 4 dar.

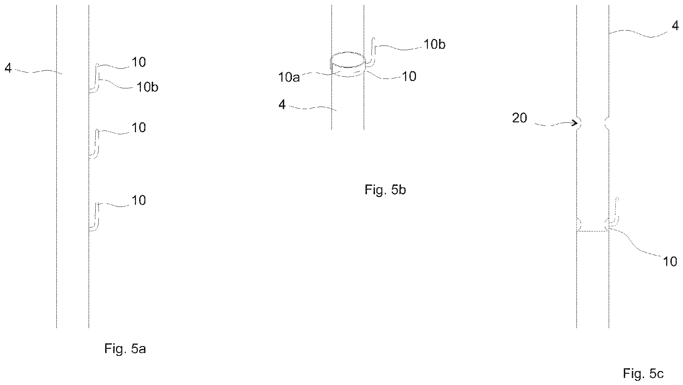

Figur 5 zeigt eine Darstellung des Zaunpfahls 1 in der Ausführungsform mit verschiedenen Befestigungsmitteln 10. Hierbei zeigen die Figuren 5a, 5b und 5c verschiedene Ausführungsformen der Befestigungsmittel 10 und des Zaunpfahls 1. Figur 5a zeigt einen Zaunpfahl 1 mit einem Ausschnitt des Rohrelements 4. In dieser Ausführungsform weist das Rohrelement 4 Befestigungsmittel 10 in der Ausführungsform als Haken auf. Die Haken weisen in diesem Fall ein Hakenelement 10b auf, welches als hakenförmiger Fortsatz ausgeführt ist. Der hakenförmiger Fortsatz 10b ist als nach oben gewölbter Fortsatz des Rohrelements 4 ausgeführt. Der Haken kann dabei zum einen direkt bei der Aufbringung der äußeren Schicht 5b auf die innere Schicht 5a ausgeformt werden. Hierbei besteht der Nachteil, dass bei Änderung der Positionierung oder Form oder Anzahl der Haken eine andere Form bei der Herstellung des Rohrelements 4 benötigt wird. Durch die Verwendung eines thermoplastischen Kunststoffes für die äußere Schicht 5b und die Matrix 7a des Verbundwerkstoffes 7 der inneren Schicht 5a ist es möglich, des Material des Rohrelements 4 nach der Herstellung nachträglich durch Wärme umzuformen. Dies eröffnet die Möglichkeit das Befestigungsmittel 10 auch in einem nachgelagerten Umformprozess aus dem Material des Rohrelements 4 zu formen. Insbesondere wäre es hierbei auch denkbar, die Haken nacheinander entlang der Rohrelementlängsachse L am Rohrelement 4 auszuformen. In diesem Fall würde nur eine Form für die Ausformung des Hakens benötigt, sodass Anzahl und Beabstandung der einzelnen Befestigungsmittel 10 frei wählbar ist, ohne dass ein neues Formwerkzeug notwendig ist.

Bevorzugt weist das Rohrelement 4 mehrere Befestigungsmittel 10 auf. Bevorzugt sind diese entlang der Rohrelementlängsachse L auf der äußeren Oberfläche des Rohrelements 4 in gleichen Abständen angeordnet. Bevorzugt sind die Befestigungsmittel 10 im Abstand zueinander an eine Maschenweite des Zaunnetzes 3 angepasst.

Figur 5b zeigt eine Ausführungsform des Befestigungsmittels 10 als Clip. Der Clip ist dabei umfänglich um das Rohrelement 4 herum angeordnet. Bevorzugt weist der Clip ein Ringelement 10a auf, welches umfänglich um das Rohrelement 4 herum angeordnet ist und dieses zumindest teilweise entlang seines Umfanges umschließt. Bevorzugt umschließt das Ringelement 10a des Befestigungsmittels 10 das Rohrelement 4 nur teilweise umfänglich. Dies bedeutet, dass der das das Ringelement 10a entlang seines Umfanges eine Öffnung aufweist, durch welche das Ringelement 10a durch Aufbiegen auf das Rohrelement 4 aufgeschoben werden kann. Bevorzugt ist das Ringelement 10a auch wieder vom Rohrelement 4 entfernbar. Das Entfernen erfolgt ebenfalls durch Aufbiegen des Ringelements 10a in umfänglicher Richtung und Abziehen des Ringelements 10a vom Rohrelement 4. Das Abziehen oder Aufschieben des Ringelements 10a auf das Rohrelement 4 kann hierbei senkrecht zur Rohrelementlängsachse L erfolgen oder auch in einer Bewegung entlang der Rohrelementlängsachse, wobei in letzterem Fall das Ringelement 10a über eines der Rohrelementenden 4a oder 4b aufgeschoben oder abgezogen wird.

Figur 5c zeigt eine Ausführungsform des Rohrelements 4 mit Vertiefungen 20. Bevorzugt, kann das Befestigungsmittel 10 in den Vertiefungen 20 angeordnet werden. Die Vertiefungen 20 sind als umfängliche Verjüngungen des Rohrelements 4 ausgebildet. Die Vertiefungen 20 stellen somit bevorzugte Rastpositionen für das Befestigungsmittel 10 dar. Bevorzugt gleicht die Erstreckung der umfänglichen Vertiefung 20, entlang der Rohrelementlängsachse L betrachtet, der Erstreckung des Befestigungsmittels. Bevorzugt wird die Vertiefung 20 mit der Ausführungsform des Befestigungsmittel 10 als Clip kombiniert. In diesem Fall kann das Ringelement 10a in die umfängliche Vertiefung 20 am Rohrelement 4 hineinrutschen und findet so eine definierte Vorzugsposition. Durch gleichmäßige Beabstandung von mehreren Vertiefungen entlang des Rohrelements 4 können mehrere Vorzugspositionen für die Befestigungsmittel 10 definiert werden. Bevorzugt sind die Abstände zwischen den einzelnen Vertiefungen 20 entlang der Rohrelementlängsachse L, und damit die Abstände der später positionierten Befestigungsmittels 10, an eine Maschenweite des Zaunnetzes 3 angepasst.

Auch bei den Vertiefungen 20 besteht zum einen die Möglichkeit, diese direkt bei Aufbringung der äußeren Schicht 5b des der Schichtstruktur 5 in das Rohrelement 4 einzuformen. Durch die Verwendung des thermoplastischen Kunststoffes als Material der äußeren Schicht 5b ist es vorteilhafter Weise auch möglich die Vertiefungen 20 in einem nachgelagerten Prozessschritt durch nachträgliche Umformung des thermoplastischen Kunststoffes einzuformen.

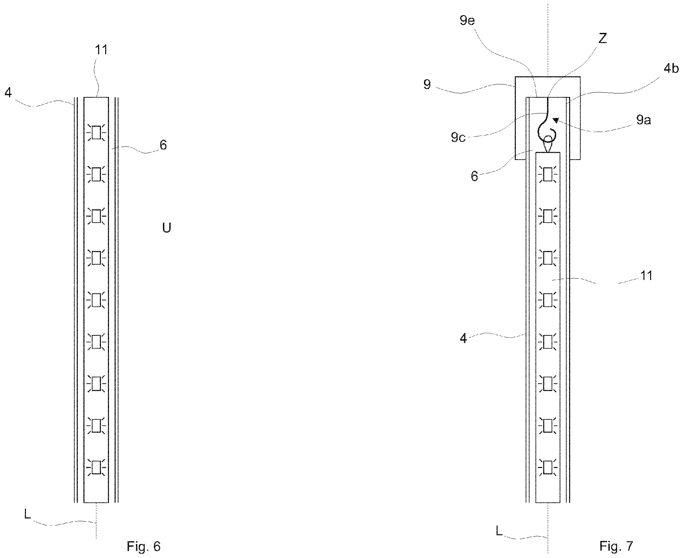

Figur 6 zeigt eine Darstellung des Zaunpfahls 1 in der Ausführungsform mit Leuchtvorrichtung 11. Die Leuchtvorrichtung 11 ist im Innenraum 6 des Rohrelements 4 angeordnet. Dabei ist das Rohrelement 4 zumindest teilweise transparent oder transluzent, also lichtdurchlässig ausgestaltet. Dies bedeutet, dass das von der Leuchtvorrichtung 11 imitierte Licht aus dem Innenraum 6 durch die innere Schicht 5a und die äußere Schicht 5b zumindest teilweise transmittiert wird. Bevorzugt ist das Rohrelement 4 mit der inneren Schicht 5a und der äußeren Schicht 5b transparent ausgestaltet. In diesem Fall kann ein größtmöglicher Anteil des von der Leuchtvorrichtung 11 emittierten Lichts durch das Rohrelement 4 transmittiert werden und so in die Umgebung U gelangen. Durch diese Anordnung der Leuchtvorrichtung 11 im Innenraum 6 des Zaunpfahls 1 ist es möglich, den Zaunpfahl 1 aktiv zu beleuchten.

Bevorzugt erstreckt sich die Leuchtvorrichtung 11 über die gesamte Länge des Rohrelements 4. Auf diese Art und Weise kann der gesamte Zaunpfahl 1 entlang seiner gesamten Länge aktiv beleuchtet werden. Dabei ist es auch denkbar, dass das Rohrelement 4 farbig ausgestaltet ist, bei gleichzeitiger, zumindest teilweiser Transparenz oder Transluzenz. Auf diese Weise kann von der Leuchtvorrichtung 11 emittiertes weißes Licht durch die Transmission durch das gefärbte Material des Rohrelements 4 in farbiges Licht umgewandelt werden. Dies bedeutet, dass die Transmission durch des Rohrelement 4 wellenlängenselektiv ist. Somit werden nur Lichtwellen bestimmter Wellenlängen transmittiert, während andere Lichtwellenlängen absorbiert oder reflektiert werden. Auf diese Weise lässt sich aus weißem Licht der Leuchtvorrichtung 11 farbiges Licht erzeugen. Bevorzugt ist das Pigment dabei nur in der äußeren Schicht 5b des Rohrelements 4 angeordnet. Dies hat den Vorteil, dass die äußere Schicht 5b vergleichsweise dünn ist und somit wenig Pigment zur gesamten Färbung Rohrelements 4 ausreichend ist. Alternativ ist es auch denkbar, dass die Leuchtvorrichtung 11 selbst farbiges Licht emittiert.

Bevorzugt ist die Leuchtvorrichtung 11 länglich geformt. Bevorzugt weist die Leuchtvorrichtung einen Durchmesser auf, welcher kleiner als der Innendurchmesser des Rohrelements 4 ist.

Figur 7 zeigt eine Darstellung einer Ausführungsform der Kappe 9 mit daran angeordneter Leuchtvorrichtung 11. In dieser Ausführungsform ist die Leuchtvorrichtung 11 an der Kappe 9 befestigt. Hierbei besitzt die Kappe 9 ein Befestigungsmittel 9c, an welchem die Leuchtvorrichtung 11 befestigt ist. Zur anschaulichen Darstellung ist das Befestigungsmittel 9c in Figur 7 als Haken dargestellt. Bevorzugt ist das Befestigungsmittel 9c jedoch als Klemmelement ausgeführt. Auch jede andere Befestigungsmittel ist mit dieser Ausführungsform kombinierbar. Bevorzugt ist das Befestigungsmittel 9c in der ersten Ausnehmung 9a der Kappe 9 angeordnet. Bevorzugt ist das Befestigungsmittel 9c derart in der ersten Ausnehmung 9a angeordnet, dass es bei Anordnung der Kappe 9 am Rohrelementende 4b in den Innenraum 6 des Rohrelements 4 hineinragt. Dafür ist das Befestigungsmittel 9c bevorzugt an einem senkrecht zur Rohrelementlängsachse L verlaufenden Flächenabschnitt 9e der Ausnehmung 9a angeordnet. Bevorzugt ist dieser horizontal verlaufende Flächenabschnitt 9e, im rotationssymmetrischen Zentrum Z der Kappe 9 angeordnet. Durch diese Anordnung wird die an der Kappe 9 befestigte Leuchtvorrichtung 11 bei Anordnung der Kappe 9 am Rohrelement 4 automatisch im Innenraum 6 des Rohrelements 4 angeordnet. Durch Abziehen der Kappe 9 vom Rohrelementende 4b kann die Leuchtvorrichtung 11 aus dem Innenraum 6 des Rohrelements 4 auf einfache Weise entfernt werden.

### Bezugszeichenliste

- 1: Zaunpfahl
- 2: Weidezaun
- 3: Zaunnetz
- 4: Rohrelement
- 4a: unteres Rohrelementende
- 4b: oberes Rohrelementende
- 4c: innere Oberfläche
- 4d: äußere Oberfläche
- 5: Schichtstruktur
- 5a: innere Schicht
- 5b: äußere Schicht
- 5c: Grenzfläche/ äußere Mantelfläche der inneren Schicht
- 6: Innenraum
- 7: Verbundwerkstoff
- 7a: Matrix
- 7b: Verstärkungsfaser
- 8: Verankerungsvorrichtung
- 8a: Adapter
- 8b: Erdspieße
- 8c: Brückenelement
- 8d: Nut
- 8e: Hakenfortsatz
- 9: Kappe
- 9a: erste Ausnehmung
- 9b: zweite Ausnehmung
- 9c: Befestigungsmittel
- 9e: Flächenabschnitt
- 10: Befestigungsmittel
- 10a: Ringelement
- 10b: Hakenelement
- 11: Leuchtvorrichtung
- 20: Vertiefung
- L: Rohrelementlängsachse
- R: radiale Richtung
- FL: Faserlängsachse
- B: Boden
- U: Umgebung
- Z: Zentrum

## Patentansprüche

1. Zaunpfahl (1) für einen mobilen Weidezaun (2), wobei der Zaunpfahl (1) zumindest umfasst: ein Rohrelement (4) welches, rohrförmig ist und einen Innenraum (6) umschließt und sich entlang einer Rohrelementlängsachse (L) erstreckt, und eine Verankerungsvorrichtung (8), welche an einem der Rohrelementenden (4a, 4b) des Rohrelements (4) angeordnet ist, mit welchem der Zaunpfahl im Boden befestigbar ist, das Rohrelement (4) aus einer Schichtstruktur (5) besteht, welche zumindest eine innere (5a) und eine äußere Schicht (5b) umfasst, welche radial aneinander angeordnet sind, sodass die innere Schicht (5a) die Oberfläche des Rohrelements (4) zum Innenraum (6) darstellt und die äußere Schicht (5b) die Oberfläche des Rohrelements (4) zur äußeren Umgebung, und die äußere Schicht (5b) aus zumindest einem thermoplastischen Kunststoff besteht und die innere Schicht (5a) aus einem faserverstärkten Verbundwerkstoff (7) besteht,
**dadurch gekennzeichnet, dass**
der faserverstärkte Verbundwerkstoff (7) zumindest eine thermoplastische Matrix (7a), zumindest bestehend aus einem thermoplastischen Kunststoff, und darin eingebettete Verstärkungsfasern (7b) umfasst, wobei die Verstärkungsfasern (7b) Endlosfasern sind.

2. Zaunpfahl (1) nach Anspruch 1,
**dadurch gekennzeichnet, dass**
das Monomer der thermoplastischen Matrix (7a) der inneren Schicht (5a) eine Viskosität unter 10 mPas, bevorzugt unter 7 mPas, besonders bevorzugt von 5 mPas aufweist.

3. Zaunpfahl (1) nach Anspruch 1 oder 2,
**dadurch gekennzeichnet, dass**
die thermoplastische Matrix (7a) der inneren Schicht (5a) ein Polyamid ist, bevorzugt Polyamid 6.

4. Zaunpfahl (1) nach einem der vorhergehenden Ansprüche,
**dadurch gekennzeichnet, dass**
die in die Matrix (7a) eingebetteten Verstärkungsfasern (7b) mit ihrer Faserlängsachse (FL) parallel zur Rohrelementlängsachse (L) ausgerichtet sind.

5. Zaunpfahl (1) nach einem der vorhergehenden Ansprüche,
**dadurch gekennzeichnet, dass**
die Verstärkungsfaser (7b) eine Glasfaser ist.

6. Zaunpfahl (1) nach einem der vorhergehenden Ansprüche,
**dadurch gekennzeichnet, dass**
der Volumengehalt der Verstärkungsfaser (7b) im Verbundwerkstoff (7) 65 - 80 Vol% beträgt.

7. Zaunpfahl (1) nach einem der vorhergehenden Ansprüche,
**dadurch gekennzeichnet, dass**
der thermoplastische Kunststoff der äußeren Schicht (5b) ein Polyamid ist.

8. Zaunpfahl (1) nach einem der vorhergehenden Ansprüche,
**dadurch gekennzeichnet, dass**
der thermoplastische Kunststoff der äußeren Schicht (5b) Farbpigmente enthält.

9. Zaunpfahl (1) nach einem der vorhergehenden Ansprüche,
**dadurch gekennzeichnet, dass**
der Zaunpfahl (1) einen Adapter (8a) aufweist mit welchem die Verankerungsvorrichtung (8) am Rohelement (4) befestigt ist, wobei der Adapter (8a) aus einem Polyamid besteht.

10. Zaunpfahl (1) nach einem der vorhergehenden Ansprüche,
**dadurch gekennzeichnet, dass**
der Zaunpfahl (1) eine Kappe (9) aufweist, welche am Rohrelementende (4b) des Rohelements (4) angeordnet ist, welches der Verankerungsvorrichtung (8) gegenüberliegt, wobei die Kappe (9) aus einem Polyamid besteht.

11. Zaunpfahl (1) nach einem der vorhergehenden Ansprüche,
**dadurch gekennzeichnet, dass**
der Zaunpfahl (1) Befestigungsmittel (10) für ein Zaunnetz (3) oder Zaunband aufweist, welche am Rohrelement (4) angeordnet sind.

12. Zaunpfahl (1) nach einem der vorhergehenden Ansprüche,
**dadurch gekennzeichnet, dass**
das Rohrelement (4) zumindest teilweise lichtdurchlässig ist und der Zaunpfahl (1) eine Leuchtvorrichtung (11) umfasst, welche im Innenraum (6) des Rohrelements (4) angeordnet ist.

13. Zaunpfahl (1) nach Anspruch 12,
**dadurch gekennzeichnet, dass**
die Leuchtvorrichtung (11) zerstörungsfrei ablösbar im Rohrelement (4) angeordnet ist.

14. Zaunpfahl (1) nach Anspruch 12 oder 13,
**dadurch gekennzeichnet, dass**
die Leuchtvorrichtung (11) eine LED-Leuchtvorrichtung in Form eines Stabs oder eines Bands ist.

## Claims

1. Fence post (1) for a mobile pasture fence (2), wherein the fence post (1) comprises at least: a tubular element (4) which is tubular and encloses an interior space (6) and extends along a tubular element longitudinal axis (L), and an anchoring device (8) which is arranged at one of the tube element ends (4a, 4b) of the tube element (4), with which the fence post can be fixed in the ground, the tube element (4) consists of a layer structure (5) which comprises at least an inner layer (5a) and an outer layer (5b) which are arranged radially to each other, so that the inner layer (5a) forms the surface of the tubular element (4) facing the interior (6) and the outer layer (5b) forms the surface of the tubular element (4) facing the external environment, and the outer layer (5b) consists of at least one thermoplastic material and the inner layer (5a) consists of a fiber-reinforced composite material (7),
**characterized in that**
the fiber-reinforced composite material (7) comprises at least one thermoplastic matrix (7a) consisting at least of a thermoplastic plastic and reinforcing fibers (7b) embedded therein, wherein the reinforcing fibers (7b) are continuous fibers.

2. Fence post (1) according to claim 1,
**characterized in that**
the monomer of the thermoplastic matrix (7a) of the inner layer (5a) has a viscosity of less than 10 mPas, preferably less than 7 mPas, and particularly preferably 5 mPas.

3. Fence post (1) according to claim 1 or 2,
**characterized in that**
the thermoplastic matrix (7a) of the inner layer (5a) is a polyamide, preferably polyamide 6.

4. Fence post (1) according to one of the preceding claims,
**characterized in that**
the reinforcing fibers (7b) embedded in the matrix (7a) are aligned with their fiber longitudinal axis (FL) parallel to the pipe element longitudinal axis (L).

5. Fence post (1) according to one of the preceding claims,
**characterized in that**
the reinforcing fiber (7b) is a glass fiber.

6. Fence post (1) according to one of the preceding claims,
**characterized in that**
the volume content of the reinforcing fiber (7b) in the composite material (7) is 65-80 vol%.

7. Fence post (1) according to one of the preceding claims,
**characterized in that**
the thermoplastic material of the outer layer (5b) is a polyamide.

8. Fence post (1) according to one of the preceding claims,
**characterized in that**
the thermoplastic material of the outer layer (5b) contains color pigments.

9. Fence post (1) according to one of the preceding claims,
**characterized in that**
the fence post (1) has an adapter (8a) with which the anchoring device (8) is attached to the pipe element (4), wherein the adapter (8a) consists of a polyamide.

10. Fence post (1) according to one of the preceding claims,
**characterized in that**
the fence post (1) has a cap (9) which is arranged at the pipe element end (4b) of the pipe element (4) opposite the anchoring device (8), wherein the cap (9) consists of a polyamide.

11. Fence post (1) according to one of the preceding claims,
**characterized in that**
the fence post (1) has fastening means (10) for a fence net (3) or fence tape, which are arranged on the tubular element (4).

12. Fence post (1) according to one of the preceding claims,
**characterized in that**
the tubular element (4) is at least partially translucent and the fence post (1) comprises a lighting device (11) which is arranged in the interior (6) of the tubular element (4).

13. Fence post (1) according to claim 12,
**characterized in that**
the lighting device (11) is arranged in the tubular element (4) in a manner that can be removed without damage.

14. Fence post (1) according to claim 12 or 13,
**characterized in that**
the light device (11) is an LED light device in the form of a rod or a strip.

## Revendications

1. Poteau de clôture (1) pour une clôture mobile (2), le poteau de clôture (1) comprenant au moins : un élément tubulaire (4) qui est tubulaire et qui entoure un espace intérieur (6) et s'étend le long d'un axe longitudinal (L) de l'élément tubulaire, et un dispositif d'ancrage (8) qui est disposé à l'une des extrémités (4a, 4b) de l'élément tubulaire (4), avec lequel le piquet peut être fixé dans le sol, l'élément tubulaire (4) étant constitué d'une structure en couches (5) qui comprend au moins une couche intérieure (5a) et une couche extérieure (5b) qui sont disposées radialement l'une par rapport à l'autre, de sorte que la couche intérieure (5a) représente la surface de l'élément tubulaire (4) vers l'espace intérieur (6) et la couche extérieure (5b) représente la surface de l'élément tubulaire (4) vers l'environnement extérieur, et la couche extérieure (5b) est constituée d'au moins une matière thermoplastique et la couche intérieure (5a) est constituée d'un matériau composite renforcé de fibres (7),
**caractérisé en ce que**
le matériau composite renforcé de fibres (7) comprend au moins une matrice thermoplastique (7a) composée au moins d'une matière thermoplastique et de fibres de renfort (7b) noyées dans celle-ci, les fibres de renfort (7b) étant des fibres continues.

2. Poteau de clôture (1) selon la revendication 1,
**caractérisé en ce que**
le monomère de la matrice thermoplastique (7a) de la couche interne (5a) présente une viscosité inférieure à 10 mPas, de préférence inférieure à 7 mPas, de manière particulièrement préférée de 5 mPas.

3. Poteau de clôture (1) selon la revendication 1 ou 2,
**caractérisé en ce que**
la matrice thermoplastique (7a) de la couche interne (5a) est un polyamide, de préférence du polyamide 6.

4. Poteau de clôture (1) selon l'une des revendications précédentes,
**caractérisé en ce que**
les fibres de renfort (7b) intégrées dans la matrice (7a) sont alignées avec leur axe longitudinal (FL) parallèle à l'axe longitudinal (L) de l'élément tubulaire.

5. Poteau de clôture (1) selon l'une des revendications précédentes,
**caractérisé en ce que**
la fibre de renfort (7b) est une fibre de verre.

6. Poteau de clôture (1) selon l'une des revendications précédentes,
**caractérisé en ce que**
la teneur en volume de la fibre de renfort (7b) dans le matériau composite (7) est comprise entre 65 et 80 % en volume.

7. Poteau (1) selon l'une des revendications précédentes,
**caractérisé en ce que**
la matière thermoplastique de la couche extérieure (5b) est un polyamide.

8. Poteau de clôture (1) selon l'une des revendications précédentes,
**caractérisé en ce que**
la matière thermoplastique de la couche extérieure (5b) contient des pigments colorés.

9. Poteau de clôture (1) selon l'une des revendications précédentes,
**caractérisé en ce que**
le poteau de clôture (1) comporte un adaptateur (8a) à l'aide duquel le dispositif d'ancrage (8) est fixé à l'élément tubulaire (4), l'adaptateur (8a) étant constitué d'un polyamide.

10. Poteau de clôture (1) selon l'une des revendications précédentes,
**caractérisé en ce que**
le poteau de clôture (1) comporte un capuchon (9) qui est disposé à l'extrémité (4b) de l'élément tubulaire (4) qui est opposée au dispositif d'ancrage (8), le capuchon (9) étant constitué d'un polyamide.

11. Poteau de clôture (1) selon l'une des revendications précédentes,
**caractérisé en ce que**
le piquet de clôture (1) comporte des moyens de fixation (10) pour un filet de clôture (3) ou un ruban de clôture, qui sont disposés sur l'élément tubulaire (4).

12. Poteau de clôture (1) selon l'une des revendications précédentes,
**caractérisé en ce que**
l'élément tubulaire (4) est au moins partiellement translucide et le poteau de clôture (1) comprend un dispositif d'éclairage (11) qui est disposé à l'intérieur (6) de l'élément tubulaire (4).

13. Poteau de clôture (1) selon la revendication 12,
**caractérisé en ce que**
le dispositif d'éclairage (11) est disposé dans l'élément tubulaire (4) de manière à pouvoir être retiré sans destruction.

14. Poteau de clôture (1) selon la revendication 12 ou 13,
**caractérisé en ce que**
le dispositif d'éclairage (11) est un dispositif d'éclairage à LED sous la forme d'une tige ou d'une bande.
